# EUROPÄISCHE PATENTANMELDUNG

(11) **EP 2 354 613 A1**
(43) Veröffentlichungstag der Anmeldung: **10.08.2011**
(21) Anmeldenummer: 10001310.1
(22) Anmeldetag: 09.02.2010
(51) Int. Cl.: F16L 11/22

(54) **Verfahren zur Herstellung eines Rohrverbunds**

(71) Anmelder: egeplast Werner Strumann GmbH & Co. KG, 48268 Greven (DE)
(72) Erfinder: Wolter, Ralf, 48477 Hörstel (DE)
(74) Vertreter: Fritz & Brandenburg Patentanwälte

(57) **Zusammenfassung**

Die vorliegende Erfindung betrifft ein Verfahren zur Herstellung eines Rohrverbunds aus wenigstens zwei Kunststoffrohren (202, 203), welche in dem Rohrverbund etwa in Längsrichtung ausgerichtet sind, wobei einzelne benachbarte Kunststoffrohre sich an ihrem äußeren Umfang etwa linienförmig berührend aneinander liegen und alle Einzelrohre des Rohrverbunds von einer gemeinsamen äußeren Deckschicht aus Kunststoff ummantelt werden, welche die Rohre zu dem Rohrverbund zusammenfasst. Erfindungsgemäß ist vorgesehen, dass im Produktionsweg vor der Ummantelung (220) wenigstens eine Führungseinrichtung (210) vorgesehen ist, durch die hindurch die Einzelrohre (202, 203) etwa in Längsrichtung parallel ausgerichtet geführt werden, wobei diese Führungseinrichtung mindestens zeitweise während des Vorschubs der Einzelrohre um eine etwa in Vorschubrichtung oder parallel zur Vorschubrichtung verlaufende Achse gedreht oder geschwenkt wird. Durch diese Maßnahme wird eine streckenweise spiralförmige oder tordierte Ausrichtung der Einzelrohre vor ihrer Ummantelung erzielt, was im späteren Rohrverbund (219) dazu führt, dass der freie Querschnitt der Einzelrohre über größere Längen erhalten bleibt.

## Beschreibung

Die vorliegende Erfindung betrifft ein Verfahren zur Herstellung eines Rohrverbunds aus wenigstens zwei Kunststoffrohren, welche in dem Rohrverbund etwa in Längsrichtung ausgerichtet sind, wobei einzelne benachbarte Kunststoffrohre sich an ihrem äußeren Umfang etwa linienförmig berührend aneinander liegen und alle Einzelrohre des Rohrverbunds von einer gemeinsamen äußeren Deckschicht aus Kunststoff ummantelt werden, welche die Rohre zu dem Rohrverbund zusammenfasst.

Ein Rohrverbund aus mehreren Kunststoffrohren der eingangs genannten Art wird beispielsweise in der DE 33 08 482 A 1 beschrieben. Der Rohrverbund soll noch so flexibel sein, dass ein Aufwickeln auf Wickeltrommeln ohne Beeinträchtigung des Durchführungsquerschnitts der Einzelrohre möglich ist. Andererseits wird der Rohrverbund dadurch verfestigt, dass außerhalb der Berührungslinien benachbarter Einzelrohre freiliegende Außenwandbereiche an ihrer Oberfläche mit einem Haftvermittler oder Kleber vorbehandelt werden und danach eine erwärmte Deckschicht aus Kunststoff aufgebracht wird. Die Deckschicht wird hier auf die Einzelrohre aufgeschrumpft und folgt über größere Umfangsbereiche (also nicht nur tangential, sondern auch in den Zwischenräumen zwischen den Einzelrohren) dem Umfang der Einzelrohre. Dieses Herstellungsverfahren ist aufwändiger als ein einfaches Aufextrudieren der ummantelnden Deckschicht in kontinuierlicher Fertigung. Zudem reicht der Verbund der Einzelrohre untereinander nicht aus, um relative Verschiebungen der Einzelrohre gegeneinander auszuschließen, wie die Praxis gezeigt hat. Hier ist zu bedenken, dass häufig große Längen des Rohrverbunds benötigt werden, die an der Baustelle von einer Trommel abgewickelt werden, so dass hohe Torsionskräfte auftreten. Auch bereits durch das Aufwickeln der Rohre werden Spannungen erzeugt, die auf die Einzelrohre einwirken. Besonders problematisch ist, dass die Lage der Einzelrohre im Rohrverbund nach der Herstellung von außen nicht mehr erkennbar ist.

Die DE 698 24 281 T 2 beschreibt ein Verfahren zur Herstellung eines Rohrbündels, welches allerdings für andere Anwendungszwecke wie beispielsweise den Transport von Getränken dient, wobei das Rohrbündel in eine Schaumstoffhülle eingeschlossen ist. Bei der Herstellung des Rohrbündels wickelt man die einzelnen Rohre jeweils von Trommeln ab, führt sie über geeignete Vorrichtungen wie beispielsweise einen Sammelführungskamm und einen bündelbildenden Ziehring zusammen und umhüllt das Rohrbündel mit der Hülle beispielsweise unter Verwendung eines Extruders.

Rohrverbunde aus Kunststoffrohren der eingangs genannten Art werden insbesondere im Außenbereich in offener oder gegebenenfalls auch in geschlossener Bauweise (grabenlos) verlegt. Die einzelnen Rohre des Rohrverbunds dienen beispielsweise als Leerrohre oder Schutzrohre für Telekommunikations-, Daten, Signal- oder Energieleitungen. Insbesondere wegen der zunehmenden Bedeutung von Glasfasernetzen für die Datenübertragung wird in naher Zukunft die Verlegung von Rohrverbunden der genannten Art in erheblichem Umfang notwendig. Glasfaserkabel können in die Leerrohre des Rohrverbunds eingeblasen oder eingezogen werden. Die Verlegung eines solchen Rohrverbunds erfolgt meist in großen Längen von beispielsweise 100 m oder mehreren 100 m. Der Rohrverbund wird dabei beim Hersteller auf große Trommeln gewickelt, zur Baustelle transportiert und bei der Verlegung vor Ort nach und nach von der Trommel abgewickelt.

Zwar werden die einzelnen Rohre durch die diese zusammenfassende Ummantelung in einem vergleichsweise festen Verbund gehalten. Bedingt durch die großen Längen und die Aufwicklung des Rohrverbunds auf Trommeln wirken jedoch nicht unerhebliche Kräfte im Rohrverbund, die dazu führen, dass sich einzelne Rohre im Verbund verlagern und über eine größere Distanz betrachtet der Idealfall eines parallelen Verlaufs der einzelnen Leerrohre nicht mehr gegeben ist. Es kommt zu Torsionen, die zu einem nicht regelmäßigen Verlauf des Einzelrohrs führen. In der Praxis kommt es daher beim späteren Einblasen oder Einziehen der Glasfaserkabel in die einzelnen Rohre des Rohrverbunds dazu, dass die Glasfaserkabel sich irgendwo in dem Leerrohr verklemmen und nur über einen Teil der gewünschten Länge verlegt werden können. Die Beseitigung derartiger Störungen ist mit erheblichem Zeit-und Arbeitsaufwand verbunden, insbesondere wenn der Rohrverbund bereits im Erdreich verlegt ist. Es ist schwierig die Stelle, an der sich die Glasfaser verklemmt zu detektieren. Gegebenenfalls muss dazu das Erdreich aufgegraben werden. Weiterhin kommt es bei fehlgeschlagener Verlegung zu Beschädigungen an dem teuren Glasfaserkabel, welches dann ersetzt werden muss.

Die Aufgabe der vorliegenden Erfindung besteht darin, ein Verfahren zur Herstellung eines Rohrverbunds aus wenigstens zwei Kunststoffrohren der eingangs genannten Gattung zur Verfügung zu stellen, bei dem die Verdrillung der Einzelrohre im Rohrverbund zumindest verringert wird und damit Leitungen wie beispielsweise Glasfaserkabel später über größere Längen in die Einzelrohre des Rohrverbunds eingezogen werden können, ohne dass es zu Behinderungen kommt.

Die Lösung dieser Aufgabe liefert ein Verfahren zur Überwachung zur Herstellung eines Rohrverbunds aus wenigstens zwei Kunststoffrohren der eingangs genannten Gattung mit den kennzeichnenden Merkmalen des Hauptanspruchs.

Erfindungsgemäß ist vorgesehen, dass im Produktionsweg vor der Ummantelung wenigstens eine Führungseinrichtung vorgesehen ist, durch die hindurch die Einzelrohre etwa in Längsrichtung parallel ausgerichtet geführt werden, wobei diese Führungseinrichtung mindestens zeitweise während des Vorschubs der Einzelrohre um eine etwa in Vorschubrichtung oder parallel zur Vorschubrichtung verlaufende Achse gedreht oder geschwenkt wird.

Durch umfangreiche Versuche in der Praxis konnte festgestellt werden, dass es vorteilhaft ist, durch die Drehung oder Schwenkbewegung der Führungseinrichtung die Einzelrohre in dem Abschnitt der Anlage, in dem sie der Vorrichtung zur Ummantelung zugeführt werden, während der Vorschubs in Längsrichtung aus ihrer geradlinigen ldealbahn heraus zu verlagern, so dass die Einzelrohre auf dem Weg in die Ummantelung beispielsweise einem etwa spiralförmigen Weg folgen und nicht mehr wie bisher gerade in die Ummantelung laufen. Diese quasi mindestens abschnittsweise spiralförmige Lage der Einzelrohre im Rohrverbund führt zu einer Verbesserung beim Einblasverhalten (nachträgliches Einblasen eines Glasfaserkabels in einzelne Rohre des Rohrverbunds), und zu einer Reduzierung der Reibung beim Einblasen oder Einziehen von Kabeln oder dergleichen in die einzelnen Leerrohre. Dies ermöglicht es wiederum solche Kabel über größere Längen in die Leerrohre des verlegten Rohrverbunds einzubringen. Auch Längenänderungen durch Verschiebung einzelner Rohre im Rohrverbund werden dadurch verhindert und Vertikalverformungen können reduziert werden.

Beispielsweise kann gemäß einer Weiterbildung des erfindungsgemäßen Verfahrens die Führungseinrichtung mindestens für einen ersten Zeitraum in eine beliebige erste Drehrichtung gedreht oder geschwenkt und danach für mindestens einen zweiten Zeitraum in die entgegengesetzte Drehrichtung gedreht oder geschwenkt werden. Auf diese Weise kann man eine einseitig spiralförmige Ausrichtung der Einzelrohre oder eine Verdrillung nur in einem Drehsinn verhindern. In dem Rohrverbund werden die Einzelrohre zwar vergleichsweise fest von der Deckschicht der Ummantelung umschlossen, haben aber die Tendenz sich aufgrund der beim Aufwickeln und Abwickeln von der Trommel einwirkenden Kräfte relativ zueinander bzw. relativ zur Ummantelung zu verlagern. Durch die spiralförmige Ausrichtung im Rahmen der Erfindung wird dem entgegengewirkt. Die Einzelrohre erhalten dadurch eine torsionsartige Vorspannung und neigen vermutlich dadurch dazu sich entgegen der Verdrillung wieder eher gerade auszurichten. Im Übrigen kommt es vermutlich beim Abwickeln und Verlegen nur noch zu Verschiebungen innerhalb der jeweils kürzeren spiralförmig ausgerichteten Rohrabschnitte und nicht mehr über die Gesamtlänge des verlegten Rohrverbunds. Bei Wechsel der Drehrichtung heben sich die Spannungen im Rohrverbund teilweise auf. Auch wenn die genaue Lage der Einzelrohre nach der Verlegung nicht unbedingt exakt vorbestimmt werden kann, so wurde doch im Rahmen der Erfindung festgestellt, dass eine Verlegung der einzuziehenden Kabel über größere Längen möglich ist und sich Knickbildungen, die den freien Querschnitt der Einzelrohre zu stark behindern, vermeiden lassen. Somit ist die erfindungsgemäße Lösung den bislang bekannten Verfahren zur Herstellung eines solchen Rohrverbunds deutlich überlegen.

Eine mögliche bevorzugte Lösungsvariante im Rahmen der vorliegenden Erfindung sieht vor, dass die Führungseinrichtung jeweils abwechselnd im Uhrzeigersinn und im Gegenuhrzeigersinn um ihre Achse gedreht oder geschwenkt wird. Man kann auch beispielsweise die Führungseinrichtung für einen ersten Zeitraum in eine Drehrichtung drehen oder schwenken, danach eine Zeit lang nicht drehen und danach in die entgegengesetzte Drehrichtung drehen oder schwenken.

Um dies zu bewerkstelligen verwendet man bevorzugt einen Drehantrieb für die Verdrehung oder das Schwenken der Führungseinrichtung, bei dem das Verhältnis von Drehgeschwindigkeit der Führungseinrichtung zu Vorschubgeschwindigkeit der Einzelrohre in der Extrusionslinie einstellbar ist. Weiterhin kann bevorzugt auch die Distanz, über die in einer Drehrichtung gedreht wird bzw. der entsprechende Zeitraum, während dessen in eine Drehrichtung gedreht wird, der Zeitpunkt des Wechsels der Drehrichtung, gegebenenfalls der Zeitraum einer Periode ohne Drehung etc. über eine Steuerung des Drehantriebs der Führungseinrichtung eingestellt werden.

Es muss im Rahmen des erfindungsgemäßen Verfahrens keine sehr starke Verdrehung oder Verschwenkung der Führungseinrichtung erfolgen. Das entsprechende Maß ist über weite Bereiche variierbar. Nur beispielhaft sei zur Veranschaulichung genannt, dass über den Drehantrieb beispielsweise eine Verdrehung oder ein Schwenken von 1° oder einigen Winkelgraden pro Meter Vorschub der Einzelrohre vorgesehen sein kann. Diese Einstellungen sollten nach Möglichkeit variierbar sein.

Wichtig ist, dass im Rahmen der vorliegenden Erfindung die Anzahl der Einzelrohre im Rohrverbund ebenso wie deren Durchmesser in weiten Bereichen variiert werden kann. Auch der Durchmesser des gesamten Rohrverbunds kann sehr unterschiedlich sein je nach Anwendungszweck. In einem Rohrverbund können weiterhin Einzelrohre sehr unterschiedlichen Durchmessers vorliegen, aber auch eine größere Anzahl von Einzelrohren, die jeweils gleichen Durchmesser aufweisen, kann in einem Rohrverbund vorliegen. Neben Rohren aus Kunststoff oder gegebenenfalls auch Kunststoff/Metall-Verbundrohren kann ein erfindungsgemäßer Rohrverbund auch Kabel umfassen.

Die erfindungsgemäße Lösung sieht gemäß einer Weiterbildung insbesondere vor, dass die Führungseinrichtung in Vorschubrichtung mit axialem Abstand vor der Einrichtung zur Ummantelung der Einzelrohre zu dem Rohrverbund angeordnet ist. Eine ausreichende Distanz zur Extrusionsvorrichtung, mittels derer die Ummantelung erfolgt, ist zweckmäßig, um die durch Verdrehung oder Schwenken der Führungseinrichtung entstehende Spannung der Einzelrohre, die sich ja nur bis zur Ummantelung spiralförmig ausrichten oder verlagern können, nicht zu groß werden zu lassen. Diese Distanz zwischen verdrehbarer Führungseinrichtung und Ummantelung hängt naturgemäß ab von dem Verhältnis zwischen Drehgeschwindigkeit und Vorschubgeschwindigkeit. Ist der Drehwinkel pro Meter an Vorschub vergleichsweise gering, kann auch der Abstand zur Ummantelung geringer gewählt werden.

Als drehbare oder schwenkbare Führungseinrichtung kommt beispielsweise eine Art Führungsscheibe oder Führungsplatte mit Löchern, Rohren oder Kanälen in Betracht, durch die die Einzelrohre jeweils hindurch geführt werden. Durch einen geeigneten Drehantrieb, der an dieser Führungseinrichtung angreift und bevorzugt steuerbar ist, wird diese Führungseinrichtung dann in Rotation um ihre Achse versetzt oder um eine gegebenenfalls auch neben der Führungseinrichtung verlaufende Achse geschwenkt. Bei einfacher Drehung der Führungseinrichtung um ihre Achse kann diese Drehachse der Führungseinrichtung beispielsweise etwa der Mittelachse des Einlaufs der nachfolgenden Extrusionsvorrichtung zur Ummantelung des Rohrbündels entsprechen. Bei einer Schwenkbewegung liegt die Achse etwa parallel zur Achse der Führungseinrichtung und somit parallel zur Vorschubrichtung.

Gegenstand der vorliegenden Erfindung ist weiterhin eine Anlage zur Herstellung eines Rohrverbunds in einem Verfahren der zuvor genannten Art, umfassend wenigstens zwei

Vorratseinheiten für wenigstens zwei Einzelrohre, von denen aus diese Einzelrohre einer Führungseinrichtung zugeführt und durch diese hindurchgeführt werden, welche um ihre Achse drehbar oder um eine Achse schwenkbar ist, sowie umfassend einen im Vorschubweg nach der Führungseinrichtung angeordneten Extruder, mittels dessen die zu einem Bündel zusammengefassten Einzelrohre am Umfang mit einer alle Rohre des Rohrbündels umfassenden Deckschicht ummantelt werden, sowie wenigstens eine dem Extruder nachgeschaltete Kühlvorrichtung zur Abkühlung der Deckschicht.

Eine solche erfindungsgemäße Anlage kann beispielsweise auch einen ersten Extruder für eine erste Ummantelung des Rohrbündels sowie eine diesem zugeordnete erste drehbare oder schwenkbare Führungseinrichtung umfasses sowie weiterhin mindestens einen zweiten Extruder für eine weitere Ummantelung des Rohrbündels, welcher in Vorschubrichtung mit Abstand hinter dem ersten Extruder angeordnet ist, sowie gegebenenfalls eine zweite dem zweiten Extruder zugeordnete drehbare oder schwenkbare Führungseinrichtung. Bei dieser bevorzugten Variante der Anlage kann man beispielsweise zunächst das Rohrbündel im ersten Extruder mit einer vergleichsweise dünneren Deckschicht (Außenhaut) ummanteln, die nur die Aufgabe hat, die Einzelrohre zu einem Rohrbündel zusammen zu fassen. Im zweiten Extruder kann man dann über dieses Rohrbündel ein weiteres Rohr mit den Normen entsprechender Wandstärke und mechanischer Festigkeit extrudieren, in dem das Rohrbündel bei einer Verlegung im Erdreich ausreichend gegen mechanische und Witterungseinflüsse geschützt ist. Es erübrigt sich dann, den Rohrverbund später in einem gesonderten Schutzrohr zu verlegen. Vielmehr wird ein im Außenbereich verlegefertiger Rohrverbund mit äußerem Schutzrohr in einem kontinuierlichen Arbeitsprozess gefertigt.

Gegenstand der vorliegenden Erfindung ist weiterhin ein Rohrverbund aus wenigstens zwei Kunststoffrohren und gegebenenfalls mindestens einem Kabel, welche in dem Rohrverbund etwa in Längsrichtung ausgerichtet sind, wobei einzelne benachbarte Kunststoffrohre sich an ihrem äußeren Umfang etwa linienförmig berührend aneinander liegen und alle Einzelrohre des Rohrverbunds von einer gemeinsamen äußeren Deckschicht aus Kunststoff ummantelt werden, welche die Rohre zu dem Rohrverbund zusammenfasst, insbesondere hergestellt nach einem Verfahren der zuvor genannten Art , welches dadurch gekennzeichnet ist, dass bei der Herstellung des Rohrverbunds vor der Ummantelung mindestens eines, vorzugsweise alle Einzelrohre eine mindestens abschnittsweise spiralförmige Ausrichtung erhalten haben.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 eine schematisch vereinfachte stirnseitige Ansicht eines Rohrverbunds gemäß einer ersten möglichen beispielhaften Variante der vorliegenden Erfindung;
Figur 2 eine schematisch vereinfachte stirnseitige Ansicht eines Rohrverbunds gemäß einer zweiten möglichen beispielhaften Variante der vorliegenden Erfindung;
Figur 3 eine schematisch vereinfachte Ansicht einer erfindungsgemäßen Anlage zur Herstellung eines solchen Rohrverbunds in der Draufsicht;
Figur 4 eine perspektivische Detailansicht eines Ausschnitts der in Figur 3 gezeigten Anlage mit der Führungseinrichtung, durch die die Einzelrohre hindurch geführt werden;
Figur 5 eine weitere perspektivische Detailansicht eines Teils der in Figur 3 gez eigten Anlage im Bereich des Einlaufs des Extruders für die Ummantelung;
Figur 6 eine schematische Darstellung eines Einzelrohrs in der Draufsicht in dem Bereich zwischen Führungseinrichtung und Extruder, anhand derer die Ausrichtung des Einzelrohrs verdeutlicht wird.

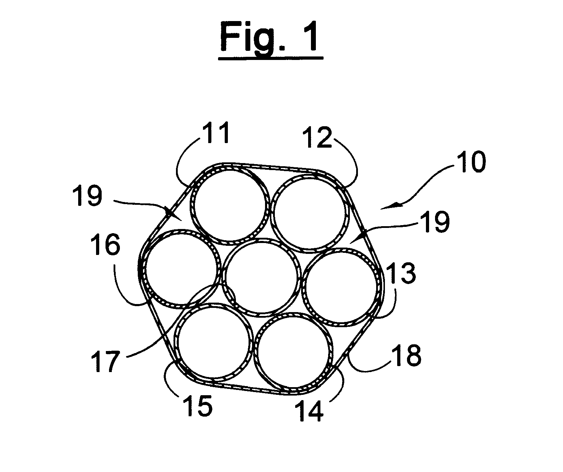

Nachfolgend wird zunächst auf Figur 1 Bezug genommen. Diese zeigt eine schematisch vereinfachte stirnseitige Ansicht eines Rohrverbunds 10 gemäß einer ersten möglichen beispielhaften Variante der vorliegenden Erfindung. Dieser umfasst in dem vorliegenden Beispiel insgesamt sieben Einzelrohre 11, 12, 13, 14, 15, 16, 17, die in einem Bündel angeordnet sind. In diesem Beispiel haben die sieben Einzelrohre einen jeweils in etwa gleich großen Durchmesser. Sie erstrecken sich in Längsrichtung des Rohrverbunds und sind so angeordnet, dass in der stirnseitigen Ansicht gemäß Figur 1 die denkbar dichteste Anordnung gegeben ist, bei der sich die benachbarten Einzelrohre jeweils an ihrem äußeren Umfang etwa linienförmig berühren (im Prinzip analog einer Kugelpackung, mit der Maßgabe, dass es sich um eine Anordnung von zylindrischen Rohren handelt.) So ist beispielsweise das äußere Rohr 11 zu den äußeren Rohren 12 und 16 benachbart und auch zu dem mittleren Rohr 17. Jedes der sechs äußeren Rohre ist somit zu drei weiteren Rohren benachbart. Das siebte Rohr 17 befindet sich in der Mitte dieser Anordnung und ist daher zu allen sechs weiteren Rohren benachbart und berührt diese im Idealfall jeweils etwa linienförmig. Diese Anordnung bietet sich an, um eine dichte raumsparende Anordnung bei Bündelung von im Durchmesser gleich großen Rohren zu erzielen. Die Anordnung ist jedoch für das Prinzip der vorliegenden Erfindung quasi beliebig variierbar und somit in dem Beispiel willkürlich gewählt, um die Erfindung zu erläutern. Es liegt auf der Hand, dass sich die geometrischen Verhältnisse ändern, sobald sich die Durchmesser der Rohre ändern.

Rohre des in Figur 1 gezeigten Rohrverbunds 10 können beispielsweise Leerrohre sein, in die später Kabel eingezogen werden. Der Rohrverbund wird beispielsweise nach der Fertigung auf eine Trommel aufgewickelt und dann bei der Verlegung im Erdreich von dieser Trommel abgezogen. Die Einzelrohre 11, 12, 13, 14, 15, 16, 17 können unterschiedliche Farben und/oder Kennzeichnungen aufweisen, so dass sie beim späteren Einziehen von beispielsweise Glasfaserkabeln unterscheidbar sind. Beispielsweise in einem nachfolgend noch zu erläuternden Extrusionsverfahren werden die sieben Einzelrohre mit einer Deckschicht 18 ummantelt und auf diese Weise an ihrem äußeren Umfang umhüllt und umspannt und so zu einem festen Rohrverbund 10 miteinander verbunden. Man sieht in Figur 1, dass die Deckschicht 18 die Einzelrohre so überzieht, dass sie diese nur jeweils abschnittsweise an ihrem Umfang berührt, was durch das Verfahren der Umhüllung bedingt ist. Es verbleiben somit zwischen der Deckschicht 18 und je zwei benachbarten Einzelrohren Freiräume 19, das heißt die Deckschicht 18 ist nicht so weit eingezogen, das sie dem Umfang der Einzelrohre über die maximal mögliche Umfangsstrecke folgt. Insgesamt folgt die Deckschicht 18 hier in etwa einer abgerundeten Sechseckform, was aber ebenfalls für die Erfindung nicht von einschränkender Bedeutung ist.

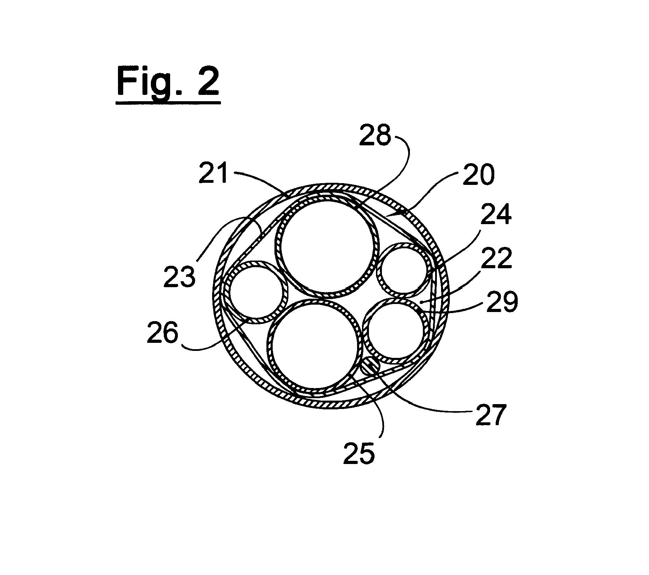

Figur 2 zeigt eine alternative Ausführungsvariante eines erfindungsgemäßen Rohrverbunds 20, welcher in diesem Fall mehrere Einzelrohre 24, 25, 26, 28, 29 unterschiedlichen Durchmessers umfasst, die mit einer Deckschicht 23 ummantelt und zu einem Rohrverbund 20 zusammengefasst sind. Man erkennt, dass ein kleineres Einzelrohr 24 vorhanden ist, ein Rohr 26 von mittlerem Durchmesser und drei weitere Einzelrohre 25, 28, 29 mit größerem Durchmesser. Die einzelnen Rohre liegen wiederum vorzugsweise so dicht wie möglich aneinander, so dass sie sich an ihrem äußeren Umfang jeweils etwa linienförmig berühren. In dem Rohrverbund ist in diesem Fall weiterhin noch ein Kabel 27 angeordnet, welches auch von der Deckschicht 23 ummantelt wird. Die übrigen Rohre 24, 25, 26, 28, 29 dienen beispielsweise als Leerrohre für später einzuziehende oder einzublasende Glasfaserkabel (nicht dargestellt.)

Die Umhüllung 23 ist eine Schicht aus Kunststoff, die in einem Extruder durch Aufextrudieren auf die Anordnung des Rohrbündels der Einzelrohre aufgebracht werden kann. Bei dieser Umhüllung handelt es sich um eine Schicht, die die Einzelrohre des Rohrverbunds umspannt und zusammenfasst, die jedoch nicht allzu dick sein muss und daher keine ausreichende mechanische Stabilität hat, um den Rohrverbund bei und nach der Verlegung im Erdreich gegen äußere mechanische Einwirkungen zu schützen. Deshalb wird in dem vorliegenden Ausführungsbeispiel der Rohrverbund 20 nach der Umhüllung noch in einem weiteren größeren Rohr 21 untergebracht, welches quasi die Funktion als Schutzrohr hat und welches hinsichtlich seines Durchmessers und seiner Wandstärke sowie in der mechanischen Stabilität einem normgerechten Rohr entspricht (Druckbeständigkeit, Rissbeständigkeit etc.) und somit für die unmittelbare Verlegung im Erdreich geeignet ist. Dieses Schutzrohr 21 kann wie in dem Ausführungsbeispiel auch einen größeren Durchmesser aufweisen als der Rohrverbund 20 mit der Ummantelung 23, so dass zwischen dieser und dem Schutzrohr 21 noch Freiräume verbleiben. Dies hat den Vorteil, dass man dort bei Bedarf später noch weitere Rohre einschieben kann, so dass das Schutzrohr 21 gleichzeitig als Leerrohr für spätere Nutzungen dient.

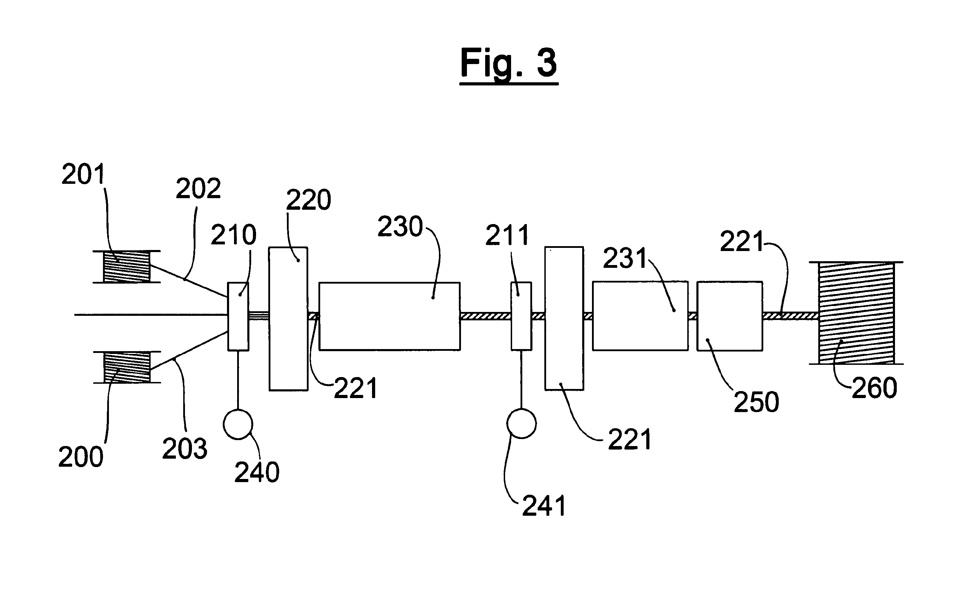

Nachfolgend wird unter Bezugnahme auf Figur 3 die Arbeitsweise des erfindungsgemäßen Verfahrens zur Herstellung eines Rohrverbunds der zuvor beschriebenen Art aus mehreren Kunststoffrohren näher erläutert. Die Anlage umfasst mehrere Trommeln 200, 201, von denen hier aus Gründen der Übersicht nur zwei dargestellt sind. Jedes der zu bündelnden Einzelrohre ist auf eine solche Trommel mit Tänzersteuerung aufgewickelt und wird von dieser abgewickelt und dann über hier nicht näher dargestellte Führungselemente der erfindungsgemäßen drehbaren Führungseinrichtung 210 zugeführt. Um die Drehung der Führungseinrichtung zu bewirken, ist ein Drehantrieb 240 vorgesehen. Diese Führungseinrichtung 210 kann beispielsweise eine um ihre Achse drehbare oder schwenkbare Lochscheibe ein, in der für jedes der zuzuführenden Einzelrohre 202, 203 eine entsprechende Lochdurchführung vorgesehen ist. Dadurch kann jedes Einzelrohr 202, 203 durch die Scheibe hindurchgeführt und bei Verdrehen oder Schwenken der Scheibe in seiner Bahn, in der es dem Ummantelungskopf 220 des Extruders zugeführt wird verändert werden. In diesem Ummantelungskopf 220 wird auf die Gesamtheit der gebündelten Einzelrohre eine Deckschicht 18, 23 (siehe Figuren 1 und 2) aufextrudiert, die die Einzelrohre zu einem Rohrbündel zusammenfasst. Den Extruder verlässt somit ein Rohrverbund 219 mit Ummantelungsschicht, der dann nachfolgend in einem Vakuum-Wasserbad 230 gekühlt wird.

In dem Ausführungsbeispiel gemäß Figur 3 ist nun in der gleichen Extrusionslinie stromabwärts noch eine zweite drehbare oder schwenkbare Führungseinrichtung 211 mit Drehantrieb 241 vorgesehen, der ein weiterer Extruder mit Ummantelungskopf 221 sowie Kühlbad 231 zugeordnet ist. Dies hat den Vorteil, dass man beispielsweise die erste Ummantelung 220 neutral schalten kann, um bei Bedarf den Extruder mit dem zweiten Ummantelungskopf für das Aufextrudieren einer Deckschicht oder eines Schutzrohrs zu nutzen. In diesem Fall bleibt die gesamte erste Vorrichtung 210, 220, 230 ungenutzt und man nutzt den zweiten Extruder, an dem man andere Parameter einstellen kann. Diesem zweiten Extruder ist eine zweite drehbare oder schwenkbare Führungseinrichtung 211 zugeordnet, damit man auch dort gegebenenfalls eine Verlagerung der Einzelrohre vornehmen kann, falls diese noch keine Deckschicht erhalten haben.

Man kann aber bei einer solchen Anlage auch den ersten Ummantelungskopf nutzen um einen Rohrverbund herzustellen und dann an dem zweiten Ummantelungskopf noch eine weitere Deckschicht oder ein Schutzrohr auf oder über den bereits vorhandenen Rohrverbund extrudieren. In diesem Fall ist natürlich keine Drehung erforderlich und auch nicht technisch sinnvoll, da bereits ein Rohrverbund vorliegt. Es wird also nur an der ersten Führungseinrichtung 210 gedreht und die zweite Führungseinrichtung 211 wird außer Betrieb gesetzt. Wenn aber noch ein Bündel aus Einzeirohren an dem zweiten Ummantelungskopf 221 ankommt, weil der erste Ummantelungskopf außer Betrieb gesetzt wurde, dann kann man die zweite Führungseinrichtung 211 nutzen, um die hindurch geführten Einzelrohre dort durch die Drehung oder das Schwenken der Führungseinrichtung zu verlagern und damit quasi zu tordieren.

Stromabwärts hinter der zweiten Extrusionsstation ist eine Abzugsvorrichtung 250 mit Signieranlage und Messvorrichtung angeordnet auf die schließlich eine am Ende der Extrusionslinie angeordnete Aufwickelstation 260 folgt, wo der Rohrverbund 219 auf eine Trommel aufgewickelt wird, so dass eine größere Länge des Rohrverbunds zum Verlegeort transportiert werden kann.

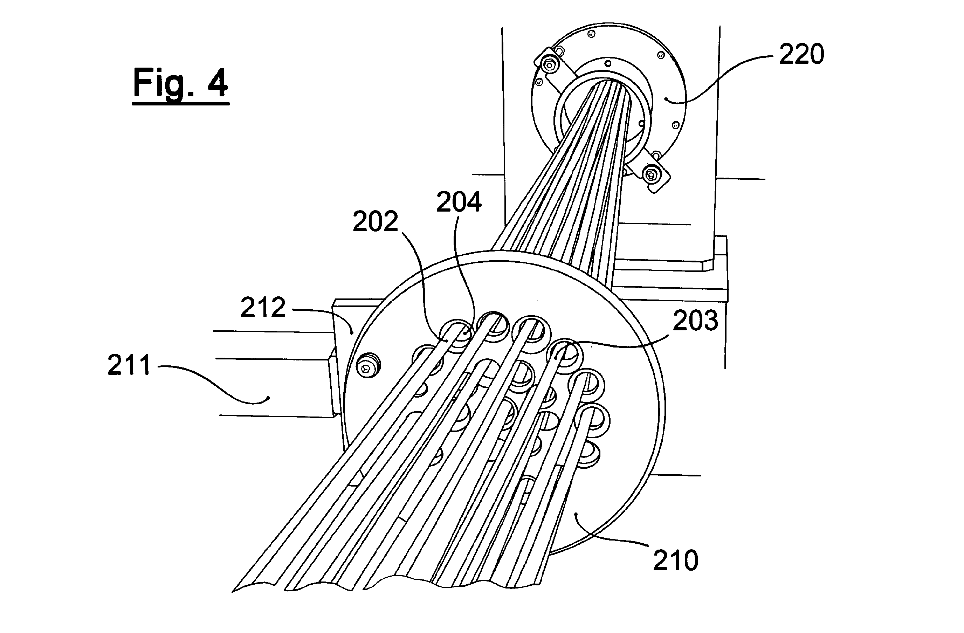

Nachfolgend wird unter Bezugnahme auf die Figur 4 die Führungseinrichtung 210 bzw. 211 noch einmal im Detail näher beschrieben. Man erkennt dort eine größere Anzahl von Einzelrohren 202, 203, die durch eine mit Löchern 204 versehene Führungsscheibe 210 hindurch geführt werden. Die Führungsscheibe 210, die hier als Führungseinrichtung dient, weist eine der Anzahl der vorgesehenen Einzelrohre 202, 203 entsprechende Anzahl von Löchern 204 auf. Bei im Durchmesser kleineren Einzelrohren können dies beispielsweise 20 oder mehr Einzelrohre sein. Diese Führungsscheibe 210 ist nun an einer Halterung 211 so gelagert, dass sie um ihre Achse gedreht oder auch um eine zur Führungsscheibe nicht mittig angeordnete Achse geschwenkt werden kann. Dazu ist ein Drehantrieb oder Schwenkantrieb 212 an der Halterung 211 angeordnet, der die Führungsscheibe 210 um einen gewissen Winkel schwenkt oder um ihre Achse dreht. Stromabwärts der Führungsscheibe ist mit axialem Abstand von dieser eine Extrusionseinheit vorgesehen mit einem Ummantelungskopf 220, in den die durch die Führungsscheibe 210 hindurch geführten Einzelrohre 202, 203 einlaufen. Wenn nun die Führungsscheibe geschwenkt oder um ihre Achse gedreht wird, dann verlagert sich die jeweilige Position der Löcher in der Führungsscheibe, so dass diese nicht mehr mit den für die Einzelrohre vorgesehenen Löchern des Einlaufs des Ummantelungskopfs fluchten. Damit findet auf der Strecke zwischen der Führungsscheibe 210 und dem Ummantelungskopf 220 eine Verlagerung des Einzelrohrs statt, die einer Verdrillung gleichkommt. Das Einzelrohr verläuft somit auf dem Weg zwischen Führungsscheibe und Ummantelungskopf auf einer etwa spiralförmigen Bahn. Dieser Effekt ergibt sich bei Drehung oder Schwenken der Führungsscheibe 210 für alle Einzelrohre, da jedem Einzelrohr jeweils ein Loch in der Führungsscheibe zugeordnet ist.

Der Drehantrieb oder Schwenkantrieb der Führungsscheibe verfügt über eine Steuerung und ist so ausgelegt, dass man diese in die eine oder andere Richtung drehen oder schwenken kann. Man kann also beispielsweise nach einer gewissen vorgegebenen Vorschubdistanz der Einzelrohre die Drehrichtung umkehren, so dass der Spannung der Einzelrohre in dem Rohrverbund nach der Extrusion eine entsprechende Gegenspannung entgegengesetzt wird und sich keine einseitig spiralförmige Ausrichtung in nur einer Drehrichtung im Rohrverbund ergibt. Ebenso kann man die Drehgeschwindigkeit ändern und damit beispielsweise bei vorgegebener Vorschubgeschwindigkeit der Einzelrohre das Verhältnis von Drehgeschwindigkeit und Vorschubgeschwindigkeit variieren. Weiterhin kann man die Gradzahl, um die gedreht wird vorgeben und somit beispielsweise nach einer Drehung von X Grad eine Umkehr der Drehrichtung vorgeben. Weiterhin kann man auch beispielsweise nach einer Drehung um einen bestimmten Drehwinkel die Führungsscheibe anhalten und eine definierte Zeit lang stillstehen lassen, bevor man erneut in die andere Drehrichtung dreht.

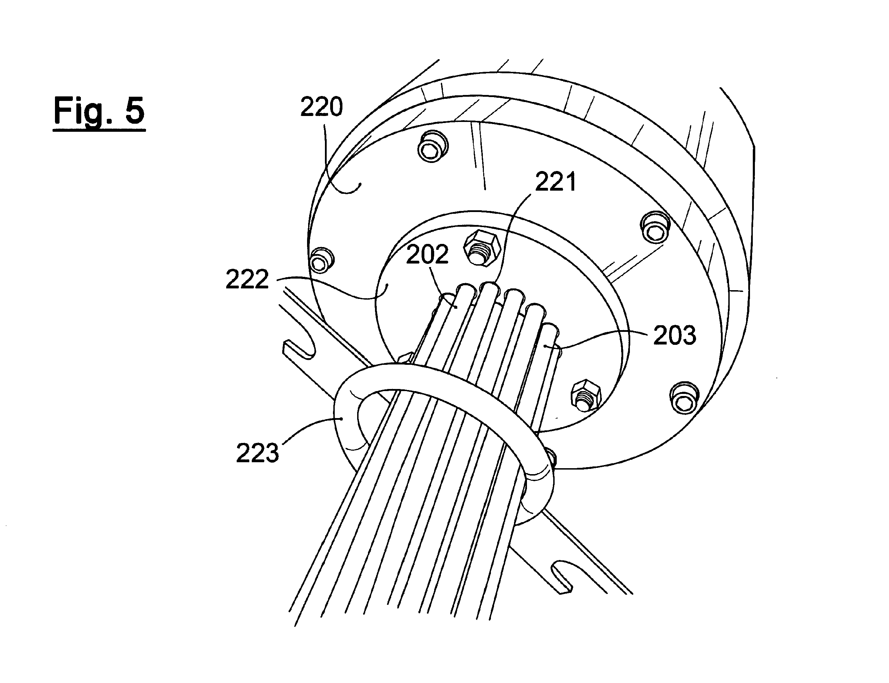

Nachfolgend wird unter Bezugnahme auf die Figur 5 der Einlaufbereich des Ummantelungskopfs 220 noch einmal detaillierter erläutert. Man sieht dort die Vielzahl der ankommenden Einzelrohre 202, 203, die in Löcher 221 einer Einlaufscheibe 222 einlaufen. Dadurch haben die Einzelrohre im Einlauf des Ummantelungskopfs 220 eine Führung. Mit etwas Abstand vor dieser Einlaufscheibe 222 kann noch ein Ring 223 angeordnet sein, durch den alle Einzelrohre hindurch geführt sein, so dass hier eine Bündelung stattfindet, wobei hier nur gewährleistet werden soll, dass die Gesamtheit der Einzelrohre einen gewissen Radius nicht überschreitet. Im Inneren des Ummantelungskopfs 220 befindet sich dann die Einrichtung, mittels derer das Rohrbündel mit einer Deckschicht ummantelt (überzogen) wird und somit durch diese Umhüllung fest zusammengefasst wird. Anschließend erfolgt eine Abkühlung in einem hier nicht dargestellten Kühlbad (siehe Figur 3.)

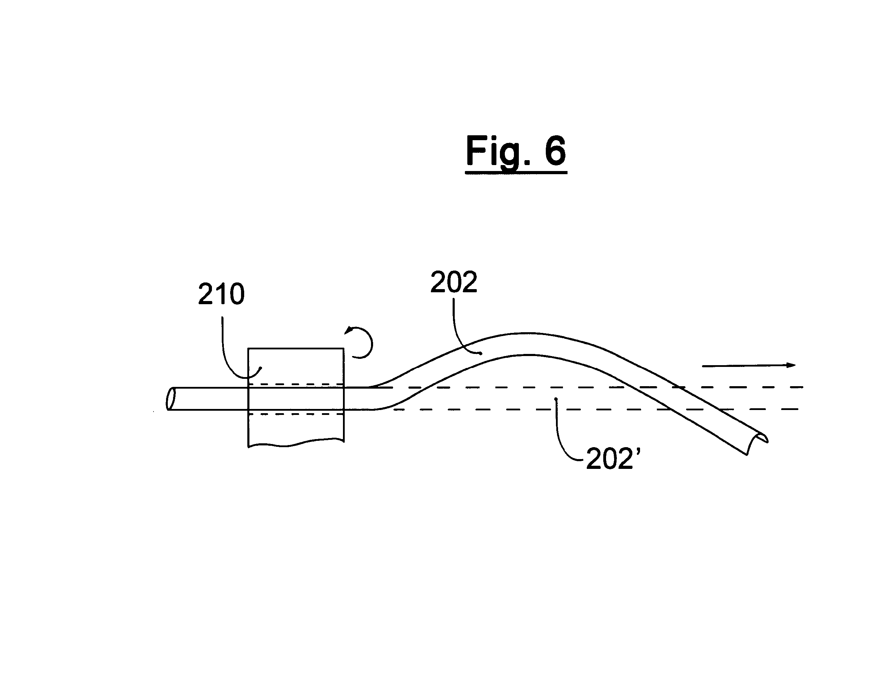

Nachfolgend wird auf Figur 6 Bezug genommen, die noch einmal in schematisch vereinfachter Darstellung in der Draufsicht den Verlauf eines Einzelrohrs 202 in dem Bereich zwischen der drehbaren oder schwenkbaren Führungsscheibe 210 und dem Ummantelungskopf zeigt, wobei letztere hier nicht gezeigt ist. Figur 6 zeigt dabei in gestrichelter Darstellung den gewöhnlichen geradlinigen Verlauf eines Einzelrohrs 202', den dieses nimmt, wenn die Führungsscheibe 210 nicht verdreht wird. Wird diese hingegen verdreht, wird das Einzelrohr 202 aus seiner geradlinigen Bahn verschoben und bewegt sich stattdessen auf einer etwa spiralförmigen Bahn. Dabei sind die Verhältnisse zur besseren Verdeutlichung in Figur 6 etwas übertrieben dargestellt. In der Praxis kann es so sein, dass die Verdrehung der Führungsscheibe 210 im Verhältnis zum Vorschub der Einzelrohre 202 nur vergleichsweise gering ist, beispielsweise nur um wenige Winkelgrade pro Meter Vorschub, so dass die Auslenkung des Einzelrohrs 202 gegenüber seiner idealen geradlinigen Bahn geringer ist als in der Zeichnung dargestellt.

### Bezugszeichenliste

- 10: Rohrverbund
- 11: Einzelrohr
- 12: Einzelrohr
- 13: Einzelrohr
- 14: Einzelrohr
- 15: Einzelrohr
- 16: Einzelrohr
- 17: Einzelrohr
- 18: Deckschicht
- 19: Freiräume
- 20: Rohrverbund
- 21: Schutzrohr
- 23: Ummantelung
- 24: Einzelrohr
- 25: Einzelrohr
- 26: Einzelrohr
- 27: Kabel
- 28: Einzelrohr
- 29: Einzelrohr
- 200: Trommel
- 201: Trommel
- 202: Einzelrohr
- 202': Einzelrohr, geradlinig
- 203: Einzelrohr
- 204: Löcher
- 210: Führungsscheibe
- 211: Halterung
- 212: Schwenkantrieb
- 219: Rohrverbund
- 220: Ummantelungskopf
- 221: Löcher
- 222: Einlaufscheibe
- 223: Ring
- 230: Kühlbad
- 240: Drehantrieb
- 241: Drehantrieb

- 250: Abzugsvorrichtung
- 260: Aufwickelstation

## Patentansprüche

1. Verfahren zur Herstellung eines Rohrverbunds aus wenigstens zwei Kunststoffrohren, welche in dem Rohrverbund etwa in Längsrichtung ausgerichtet sind, wobei einzelne benachbarte Kunststoffrohre sich an ihrem äußeren Umfang etwa linienförmig berührend aneinander liegen und alle Einzelrohre des Rohrverbunds von einer gemeinsamen äußeren Deckschicht aus Kunststoff ummantelt werden, welche die Rohre zu dem Rohrverbund zusammenfasst, **dadurch gekennzeichnet, dass** im Produktionsweg vor der Ummantelung (220) wenigstens eine Führungseinrichtung (210) vorgesehen ist, durch die hindurch die Einzelrohre (202, 203) etwa in Längsrichtung parallel ausgerichtet geführt werden, wobei diese Führungseinrichtung mindestens zeitweise während des Vorschubs der Einzelrohre um eine etwa in Vorschubrichtung oder parallel zur Vorschubrichtung verlaufende Achse gedreht oder geschwenkt wird.

2. Verfahren nach Anspruch 1, **dadurch gekennzeichnet, dass** die Führungseinrichtung (210) mindestens für einen ersten Zeitraum in eine Drehrichtung gedreht oder geschwenkt und danach für mindestens einen zweiten Zeitraum in die entgegengesetzte Drehrichtung gedreht oder geschwenkt wird.

3. Verfahren nach Anspruch 1 oder 2, **dadurch gekennzeichnet, dass** die Führungseinrichtung (210) jeweils abwechselnd im Uhrzeigersinn und im Gegenuhrzeigersinn um ihre Achse gedreht oder geschwenkt wird.

4. Verfahren nach einem der Ansprüche 1 bis 3, **dadurch gekennzeichnet, dass** die Führungseinrichtung (210) für einen ersten Zeitraum in eine Drehrichtung gedreht oder geschwenkt, danach eine Zeit lang nicht gedreht und danach in die entgegengesetzte Drehrichtung gedreht oder geschwenkt wird.

5. Verfahren nach einem der Ansprüche 1 bis 4, **dadurch gekennzeichnet, dass** ein Drehantrieb (240) für die Verdrehung oder das Schwenken der Führungseinrichtung (210) vorgesehen ist, wobei das Verhältnis von Drehgeschwindigkeit der Führungseinrichtung zu Vorschubgeschwindigkeit der Einzelrohre in der Extrusionslinie einstellbar ist.

6. Verfahren nach einem der Ansprüche 1 bis 5, **dadurch gekennzeichnet, dass** über eine Steuerung des Drehantriebs (240) der Führungseinrichtung (210) die Distanz, über die in einer Drehrichtung gedreht oder geschwenkt wird und/oder der entsprechende Zeitraum, während dessen in eine Drehrichtung gedreht oder geschwenkt wird, und/oder der Zeitpunkt des Wechsels der Drehrichtung und/oder der Zeitraum einer Periode ohne Drehung oder Schwenken einstellbar sind.

7. Verfahren nach einem der Ansprüche 1 bis 6, **dadurch gekennzeichnet, dass** die Führungseinrichtung (210) in Vorschubrichtung mit axialem Abstand vor der Einrichtung zur Ummantelung (220) der Einzelrohre zu dem Rohrverbund angeordnet ist.

8. Verfahren nach einem der Ansprüche 1 bis 7, **dadurch gekennzeichnet, dass** zunächst mindestens zwei Einzelrohre (202, 203) oder Kabel jeweils von Trommeln (200, 201) abgewickelt und der Führungseinrichtung (210) zugeführt werden, wo sie jeweils durch jedem Einzelrohr zugeordnete Führungen geleitet werden, dass danach die Deckschicht als Ummantelung aufextrudiert wird, der entstandene Rohrverbund (219) abgekühlt und schließlich als Rohrverbund auf eine Trommel (260) aufgewickelt oder auf vorgegebene Längen geschnitten wird.

9. Anlage zur Herstellung eines Rohrverbunds in einem Verfahren nach einem der Ansprüche 1 bis 8, umfassend wenigstens zwei Vorratseinheiten (200, 201) für wenigstens zwei Einzelrohre (202, 203), von denen aus diese Einzelrohre einer Führungseinrichtung (210) zugeführt und durch diese hindurchgeführt werden, welche um ihre Achse drehbar oder um eine Achse schwenkbar ist sowie umfassend einen im Vorschubweg nach der Führungseinrichtung angeordneten Extruder (220) mittels dessen die zu einem Bündel zusammengefassten Einzelrohre am Umfang mit einer alle Rohre des Rohrbündels umfassenden Deckschicht (23) ummantelt werden sowie wenigstens eine dem Extruder nachgeschaltete Kühlvorrichtung (230) zur Abkühlung der Deckschicht.

10. Anlage nach Anspruch 9, **dadurch gekennzeichnet, dass** ein Drehantrieb (240) für die Führungseinrichtung (210) vorgesehen ist, der eine Einstellung der Drehgeschwindigkeit und/oder eine Änderung der Drehrichtung zulässt.

11. Anlage nach einem der Ansprüche 9 oder 10, **dadurch gekennzeichnet, dass** diese einen ersten Extruder (220) für eine erste Ummantelung des Rohrbündels sowie eine diesem zugeordnete erste drehbare Führungseinrichtung (210) umfasst sowie weiterhin mindestens einen zweiten Extruder für eine weitere Ummantelung des Rohrbündels, welcher in Vorschubrichtung mit Abstand hinter dem ersten Extruder angeordnet ist, sowie gegebenenfalls eine zweite dem zweiten Extruder zugeordnete drehbare Führungseinrichtung.

12. Rohrverbund aus wenigstens zwei Kunststoffrohren und gegebenenfalls mindestens einem Kabel, welche in dem Rohrverbund etwa in Längsrichtung ausgerichtet sind, wobei einzelne benachbarte Kunststoffrohre sich an ihrem äußeren Umfang etwa linienförmig berührend aneinander liegen und alle Einzelrohre des Rohrverbunds von einer gemeinsamen äußeren Deckschicht aus Kunststoff ummantelt werden, welche die Rohre zu dem Rohrverbund zusammenfasst, insbesondere hergestellt nach einem Verfahren gemäß einem der Ansprüche 1 bis 8 **dadurch gekennzeichnet, dass** bei der Herstellung des Rohrverbunds (219) vor der Ummantelung mindestens eines, vorzugsweise alle Einzelrohre (202, 203) eine mindestens abschnittsweise spiralförmige oder tordierte Ausrichtung erhalten haben.
